# EUROPEAN PATENT APPLICATION

(11) **EP 1 511 302 A2**
(43) Date of publication of application: **02.03.2005**
(21) Application number: 04255031.9
(22) Date of filing: 20.08.2004
(51) Int. Cl.: H04N 5/44

(54) **Digital television signal decoder**

(30) Priority: 29.08.2003 GB 0320314
(71) Applicant: Pioneer Technology United Kingdom Limited, Castleford, West Yorkshire WF10 5PE (GB)
(72) Inventor: Forse, Neal c/o Pioneer Technology UK Limited, Castleford, West Yorkshire WF10 5PE (GB); Kato, Masaru c/o Pioneer Technology UK Limited, Castleford, West Yorkshire WF10 5PE (GB); Kamezaki, Hiroyuki c/o Pioneer Technology UK Ltd., Castleford, West Yorkshire WF10 5PE (GB)
(74) Representative: Haley, Stephen

(57) **Abstract**

A digital television signal decoder comprises a digital signal input, and decoding and decompression means for decoding and decompressing a compressed data signal received through the input. An output outputs, in use, a decompressed video signal from the decoding and decompression means to a display. A control input receives, in use, control data and storage means stores, upon receipt of a control input from a user, a user-selected still image from the received digital data.

## Description

The present invention relates to a digital television signal decoders, also known as integrated receiver decoders.

Digital television signal decoders are well known in the art. In general terms they receive a compressed video and audio signal in a digital form from a fixed cable connection, or from an antenna which has received the signal from either a satellite or land-based transmitter. The compressed digital signals are transmitted in one of a number of standard formats, such as the "DVB MPEG2" video format defined by the standard "ISO/IEC 13818.2" . The decoder, in simple terms, receives a compressed signal, decompresses it and provides an output in a format which can be displayed by a standard display unit, such as a television.

As with many consumer electronic devices, such decoders are expected by consumers to be provided with features which increase their functionality in use views and which have additional user benefits above and beyond those provided by a traditional analogue television receiver. However, provision of such features can be difficult to achieve in practice, given the complex signal format that is provided to the decoder, the need to keep the costs of the decoder to a minimum, and because the television signal which is output from the decoder contains a large amount of data which is in a format which is difficult to store and manipulate in a simple and cost-effective manner.

Accordingly, one object of the present invention is to provide a digital television signal decoder which provides increased functionality without the need to increase significantly the number of components within the decoder or the overall costs thereof.

According to the present invention there is provided a digital television signal decoder comprising:
a digital signal input;
decoding and decompression means for decoding and decompressing a compressed data signal received through the input;
an output for outputting, in use, a decompressed video signal from the decoding and decompression means to a display;
a control input for receiving, in use, control commands from a user; and
data storage means for storing, upon receipt of a control input from a user, a user-selected still image from the received digital data.

The decoder may be arranged such that the storage means stores a still image frame from the input prior to decompression of that frame. In this case, the decoder may be arranged to output an image based on data stored in the data storage means by firstly passing it through the decoding means.

The storage means may be a non-volatile memory.

The decoder may further comprise an additional still data output for outputting, in use, data stored in the storage means to a device such as a personal computer.

The decoder may have control means associated with the storage means for outputting the still image data stored therein, and the control means may be configured so that it can selectively output one of the upper, lower, or both upper and lower fields of a stored still image.

The decoder may be arranged such that it is capable of receiving compressed MPEG signals, and in this case the storage means may be arranged to store the first I-frame input to the decoder following input of the appropriate control command from the user.

The present invention provides additional functionality to a user in that it enables them to record a single still image in a digital signal decoder in a simple and effective manner. This means that an end-user can store for future reference image data in the received video signal such as an important telephone number, address, or even something such as a food recipe or driving directions.

The present invention also provides for the ability for the system to store the stored data in an arrangement which uses a minimum amount of storage space, meaning that the invention can be provided in a relatively standard decoding arrangement without significant increase in cost or complexity. It also provides additional functionality in that it may enable a user to send the data to external storage for possible manipulation and other use, and also enables a user to ensure that the still image that is output is of as high a quality as possible if the frame selection provision is enabled.

One example of the present invention will now be described with reference to the accompanying drawings, in which:
Figure 1 is a schematic block diagram of a digital television signal decoder according to the present invention; and
Figure 2 is a flow diagram showing the operation of the decoder of figure 1 in use.

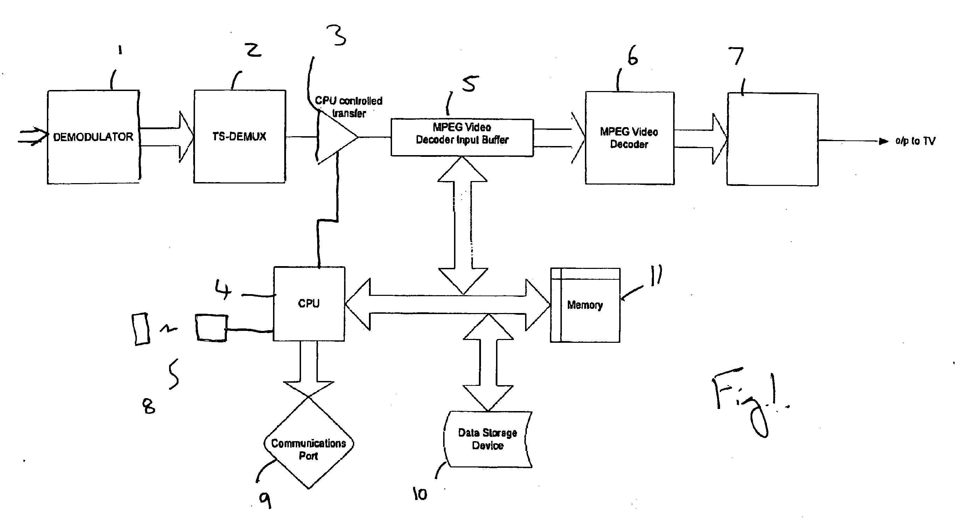

Referring to figure 1, a digital television signal decoder according to the present invention is shown. The decoder of figure 1 operates in accordance with the DVB MPEG2 video format, although the invention can apply to other digital television signal decoders that operate under different formats.

In figure 1 a compressed and encoded digital television signal is input into a demodulator 1 in the decoder. The signal may have been received from a cable connection, or from an antenna (not shown) receiving signals either from a satellite or ground-based transmitter. The demodulator 1 demodulates the input data signal and transfers it to a transport stream demultiplexer 2 which de-multiplexes the signal in accordance with the DVB standard. A transfer component 3 controls transfer of the output demultiplex data to a video decoder input buffer 5. Transfer to the buffer 5 is controlled by command signals from a CPU 4 which provides overall processing control for the decoder. When the decoder is under standard operation, during normal television channel viewing, the buffer 5 controls transfer of the data to a decoder component 6 which decodes a signal transferred from the buffer 5 and then transfers the decoded MPEG signal to a converter 7 which converts the decoded MPEG signal into analogue video and audio outputs that can be fed to a standard television (not shown) for display.

Associated with the CPU 4 is a user control input 8 which receives control commands from a user. The control input 8 may consist of a control keyboard on the decoder or a remote control unit, for example associated with the CPU 4 is a communications port 9 which is arranged to be connected with an external peripheral device, such as a personal computer or external flash memory, for example. The CPU 4 has a processing memory 11 and the decoder also has a non-volatile memory 10 which is linked to the CPU 4.

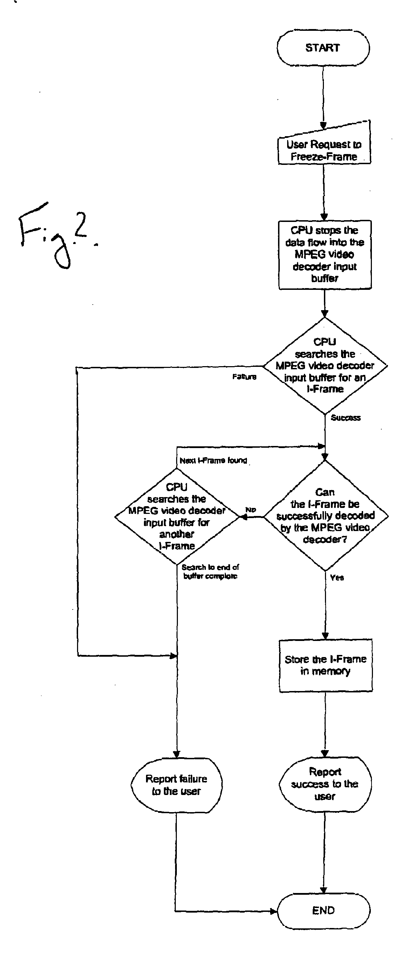

Figure 2 shows the operation of the decoder of figure 1 in use when performing in accordance with the invention.

As a first step, a user request to select and store a still frame is detected by the decoder via the communication section 8. In a simplified example of the invention an image is then stored in the non-volatile memory 10 after being decoded by the MPEG video decoder 6 under control the CPU 4. However, in this example, the CPU 4 stops data flow into the buffer 5 by controlling the transfer component 3. The CPU 4 then searches the buffer 5 for an MPEG intra-frame (I-frame) within the data in the buffer 5. The I-frame is a compressed image frame. If no I-frame is found then the request is considered to be unsuccessful and a failure report is issued to the user via the output video signal and the television. If an I-frame is detected the CPU then instructs the decoder component 6 to attempt decoding. If decoding is unsuccessful the CPU 4 searches for another I-frame in the buffers, and if the search continues to be unsuccessful then, again, a failure is reported to the user.

If an I-frame is obtained which is capable of successful decoding by the decoding component 6 then the CPU 4 instructs recordal of the I-frame in the non-volatile memory 10 and reports a successful obtaining function to the user. In this example an I-frame is stored because of its reduced data size compared to a completely decoded and decompressed signal, meaning that a smaller memory can be provided to the device whilst still enabling a user to store the required images.

In the example of figure 1 replay of any stored still image data in the non-volatile memory 10 can be instructed via the user input 8 and the CPU 4. In this case, the data is fed to the decoding component 6 and then output to the television for viewing. An alternative to output to the television the decoder of figure 1 is arranged such that output can be requested via connection to a data storage device 9 which can be removably connected to the decoder and which may be an external PC or other display device.

The decoder of the present invention also has the possibility, again through control of the user input 8, for a user to select the viewing mode of still image data collected in the non-volatile memory 10. Due to the interlacing nature of television pictures, each stored frame will have two fields (an upper field and a lower field), which in certain circumstances will differ from one another due to the nature of the moving image that is being portrayed. However, certain image data, such as that provided during transmittal of a movie, for example, has no movement variation between the upper and lower fields. Accordingly, the device allows a user to select viewing so that display is either solely of an upper field, solely of a lower field, or a combination of an upper or lower fields. This will, when standard images are provided from a standard television image source, enable a user to display an image without flicker on that still image. It will, however, also enable the user to display an image of greater definition when no flicker would normally be present.

As will be appreciated from the above, the present invention provides a system with increased functionality with respect to the prior art. It has additional technical benefits in that it enables provision of a system which does not have large memory requirement and an increased component count as compared to the prior art, which is also simple and user-friendly to operate.

## Claims

1. A digital television signal decoder comprising:
a digital signal input;
decoding and decompression means for decoding and decompressing a compressed data signal received through the input;
an output for outputting, in use, a decompressed video signal from the decoding and decompression means to a display;
a control input for receiving, in use, control commands from a user; and
data storage means for storing, upon receipt of a control input from a user, a user-selected still image from the received digital data.

2. The decoder of claim 1, arranged such that the storage means stores a still image frame from the input prior to decompression of that frame.

3. The decoder of claim 2, arranged to output an image based on data stored in the data storage means by firstly passing it through the decoding and decompressing means.

4. The decoder of claim 3, arranged such that it is capable of decoding and decompressing compressed MPEG signals, and the storage means is arranged to store the first I-frame input to the decoder following input of the appropriate control command from the user.

5. The decoder of any preceding claim, wherein the data storage means is a non-volatile memory.

6. The decoder of any preceding claim further comprising an additional still data output for outputting, in use, data stored in the storage means to an external device.

7. The decoder of any preceding claim, further comprising a demultiplexer for demultiplexing a signal input to the decider and providing the demultiplexer signal to the decoding and decompression means.
